# EUROPEAN PATENT APPLICATION

(11) **EP 4 293 741 A1**
(43) Date of publication of application: **20.12.2023**
(21) Application number: 21925855.5
(22) Date of filing: 22.12.2021
(51) Int. Cl.: H01M 4/13, H01M 4/62, H01M 10/0562, H01M 10/0585, H01M 50/204

(54) **BATTERY, BATTERY SYSTEM, AND BATTERY MANUFACTURING METHOD**

(30) Priority: 12.02.2021 JP 2021020849
(71) Applicant: Panasonic Intellectual Property Management Co., Ltd., Kadoma-shi, Osaka 571-0057 (JP)
(72) Inventor: HONDA, Kazuyoshi, Tokyo 103-0022 (JP); KOGA, Eiichi, Tokyo 103-0022 (JP); HIRANO, Koichi, Tokyo 103-0022 (JP); KAWASE, Akira, Tokyo 103-0022 (JP)
(74) Representative: Eisenführ Speiser
(86) International application number: PCT/JP2021/047657
(87) International publication number: WO 2022/172612

(57) **Abstract**

The battery (1000) includes a power generation element including: a positive electrode active material layer (120) containing a positive electrode active material and a first inorganic solid electrolyte; a negative electrode active material layer (110) containing a negative electrode active material and a second inorganic solid electrolyte; and a solid electrolyte layer (130) positioned between the positive electrode active material layer (120) and the negative electrode active material layer (110) and containing a third inorganic solid electrolyte. There are a plurality of voids (250) inside the power generation element (100), and an internal pressure of the plurality of voids (250) is lower than 1 atm.

## Description

### [Technical Field]

The present disclosure relates to a battery, a battery system, and a battery manufacturing method.

### [Background Art]

In Patent Literature (PTL) 1, a method for manufacturing a bipolar secondary battery, the method including: preparing a bipolar electrode; preparing an electrolyte; stacking the bipolar electrode and a layer of the electrolyte or a precursor thereof to obtain a stacked body including a single cell layer; and forming a sealing portion on an outer periphery of the single cell layer is disclosed. In the manufacturing method of PTL 1, the electrolyte contains a solvent or a dehydrating agent having a boiling point lower than that of water, and the method includes reducing the pressure of the electrolyte to a pressure of less than 20 Torr before or simultaneously with forming the seal portion.

PTL 2 discloses a lithium ion battery in which the solid electrolyte layer has an average porosity lower than or equal to 9%.

PTL 3 discloses reducing the pressure in order to fill the voids in the negative electrode and the microporous separator with a lithium ion conductive polymer solid electrolyte.

### [Citation List]

### [Patent Literature]

PTL 1: Japanese Unexamined Patent Application Publication No. 2010-113939
PTL 2: International Patent Publication No. 2018/123479
PTL 3: Japanese Unexamined Patent Application Publication No. 2018-198131

### [Summary of Invention]

### [Technical Problem]

In the conventional technology, further improvements in battery characteristics and reliability are desired.

In addition, batteries containing solid electrolytes are also required to have high battery characteristics such as high capacity expression and excellent charge-discharge cycle characteristics.

For example, since inorganic solid electrolytes have excellent ionic conductivity, high-capacity batteries containing solid electrolytes can be realized. However, inorganic solid electrolytes are generally less flexible than, for example, polymer solid electrolytes. For that reason, in order to develop the characteristics of batteries using inorganic solid electrolytes, it is important to apply an external restraining force from the direction normal to the main surface of the battery in order to increase the ionic conductivity of the active material layer, the solid electrolyte layer, and the interface between the active material layer and the solid electrolyte layer, and maintain this even after repeated charging and discharging.

On the other hand, applying a mechanism of a restraint or the like for applying an external restraining force is inconvenient for obtaining the capacity density per volume and the capacity density per weight of the battery, and suppressing the decrease in capacity due to repeated charging and discharging is an important issue for ensuring the long-term reliability of batteries.

Therefore, the present disclosure provides a battery and the like that achieves both high battery characteristics and high reliability.

### [Solution to Problem]

A battery in one aspect of the present disclosure includes a power generation element including: a positive electrode layer containing a positive electrode active material and a first inorganic solid electrolyte; a negative electrode layer containing a negative electrode active material and a second inorganic solid electrolyte; and a solid electrolyte layer positioned between the positive electrode layer and the negative electrode layer and containing a third inorganic solid electrolyte, wherein a plurality of voids are present inside the power generation element, and an internal pressure of the plurality of voids is lower than 1 atm.

In addition, a battery system according to one aspect of the present disclosure includes a container including an internal space that serves as a reduced-pressure environment; and the battery described above, which is disposed in the internal space.

In addition, a method for manufacturing a battery, which includes: a positive electrode layer containing a positive electrode active material and a first inorganic solid electrolyte; a negative electrode layer containing a negative electrode active material and a second inorganic solid electrolyte; and a solid electrolyte layer positioned between the positive electrode layer and the negative electrode layer and containing a third inorganic solid electrolyte, in one aspect of the present disclosure includes: pressing a body to be compressed including at least one of the positive electrode layer, the negative electrode layer, or the solid electrolyte layer in a reduced-pressure atmosphere.

In addition, a method for manufacturing a battery, which includes a positive electrode layer, a negative electrode layer, and a solid electrolyte layer positioned between the positive electrode layer and the negative electrode layer, according to one aspect of the present disclosure includes pressing a body to be compressed, which is formed by stacking the positive electrode layer and the negative electrode layer to face each other with the solid electrolyte layer interposed therebetween, in a reduced-pressure atmosphere.

### [Advantageous Effects of Invention]

According to the present disclosure, it is possible to achieve both high battery characteristics and high reliability of batteries and the like.

### [Brief Description of Drawings]

[FIG. 1]

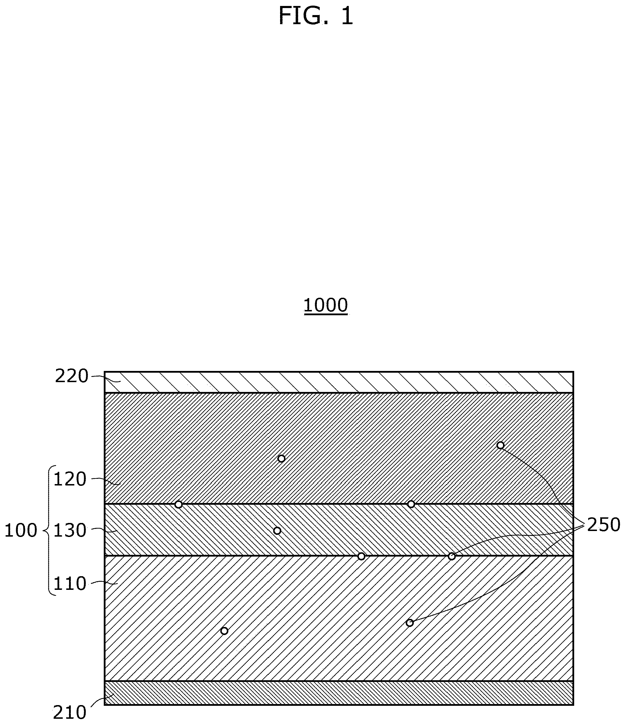

   FIG. 1 is a cross-sectional view showing a schematic configuration of a battery according to Embodiment 1.
[FIG. 2]

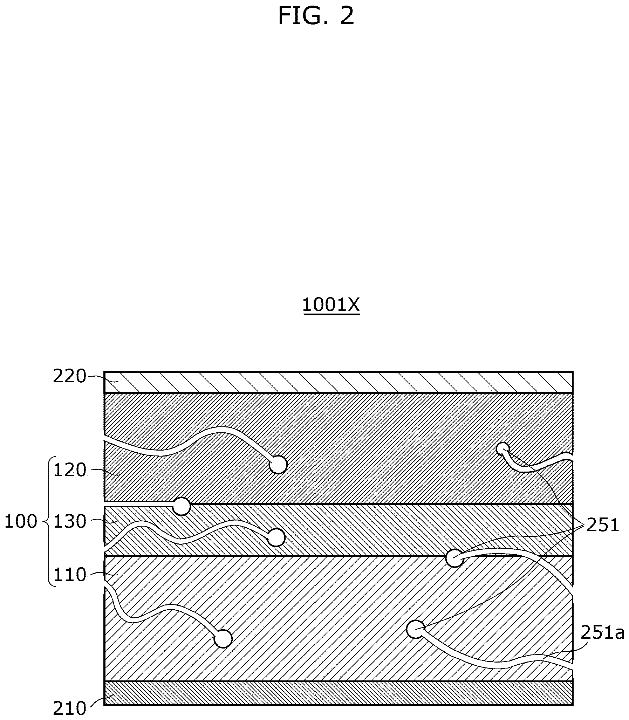

   FIG. 2 is a cross-sectional view showing a schematic configuration of a battery according to Comparative Example 1.
[FIG. 3]

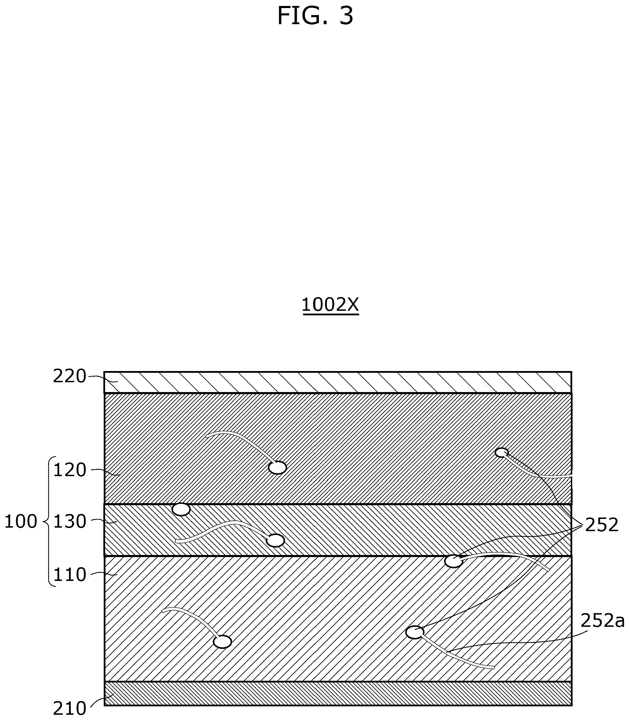

   FIG. 3 is a cross-sectional view showing a schematic configuration of a battery according to Comparative Example 2.
[FIG. 4]

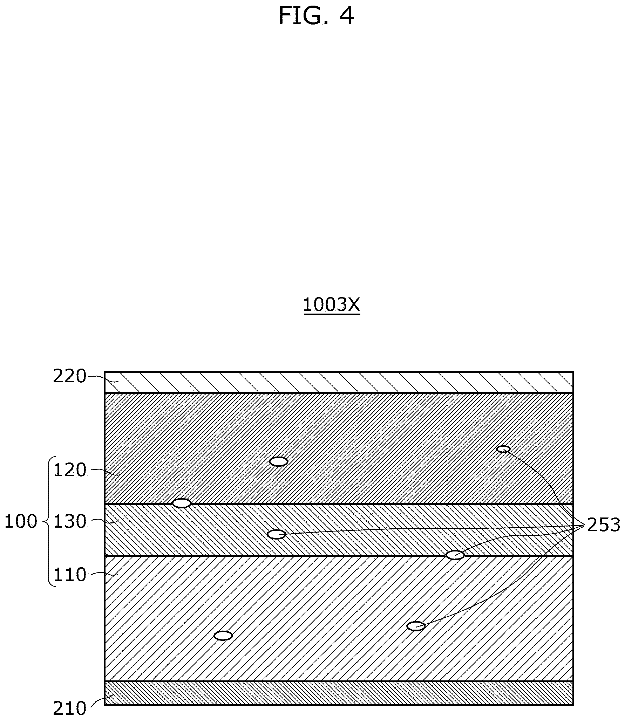

   FIG. 4 is a cross-sectional view showing a schematic configuration of a battery according to Comparative Example 3.
[FIG. 5]

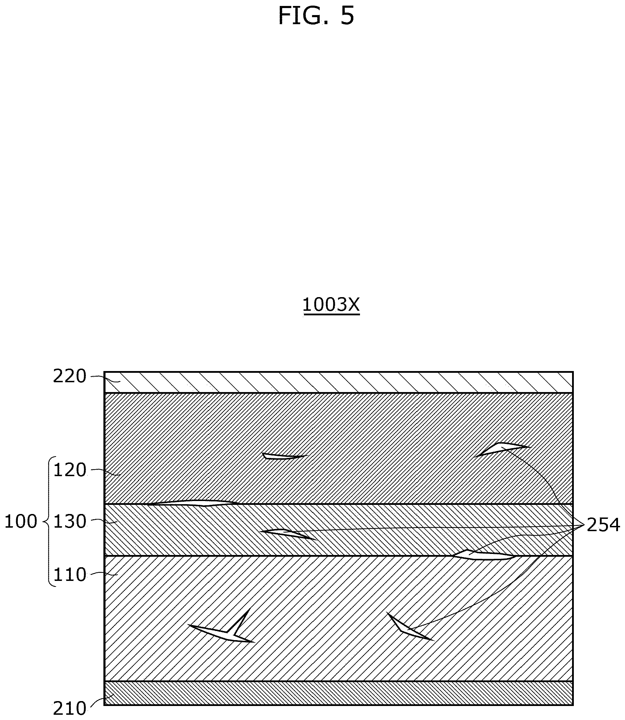

   FIG. 5 is a diagram for explaining damage that occurs in the battery according to Comparative Example 3.
[FIG. 6A]

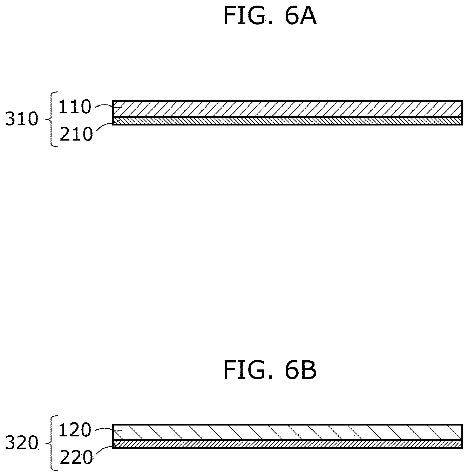

   FIG. 6A is a cross-sectional view showing a schematic configuration of a stacked body formed by a method for manufacturing the battery according to Embodiment 1.
[FIG. 6B]
   FIG. 6B is a cross-sectional view showing a schematic configuration of another stacked body formed by the method for manufacturing the battery according to Embodiment 1.
[FIG. 7A]

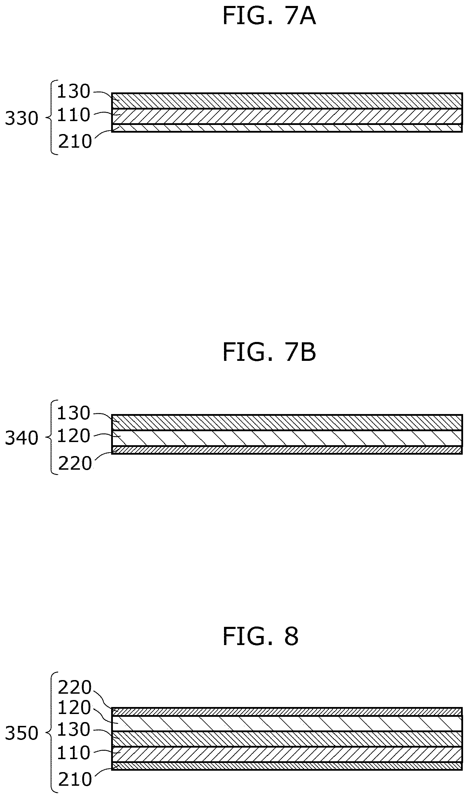

   FIG. 7A is a cross-sectional view showing a schematic configuration of still another stacked body formed by the method for manufacturing the battery according to Embodiment 1.
[FIG. 7B]
   FIG. 7B is a cross-sectional view showing a schematic configuration of still another stacked body formed by the method for manufacturing the battery according to Embodiment 1.
[FIG. 8]
   FIG. 8 is a cross-sectional view showing a schematic configuration of still another stacked body formed by the method for manufacturing the battery according to Embodiment 1.
[FIG. 9]

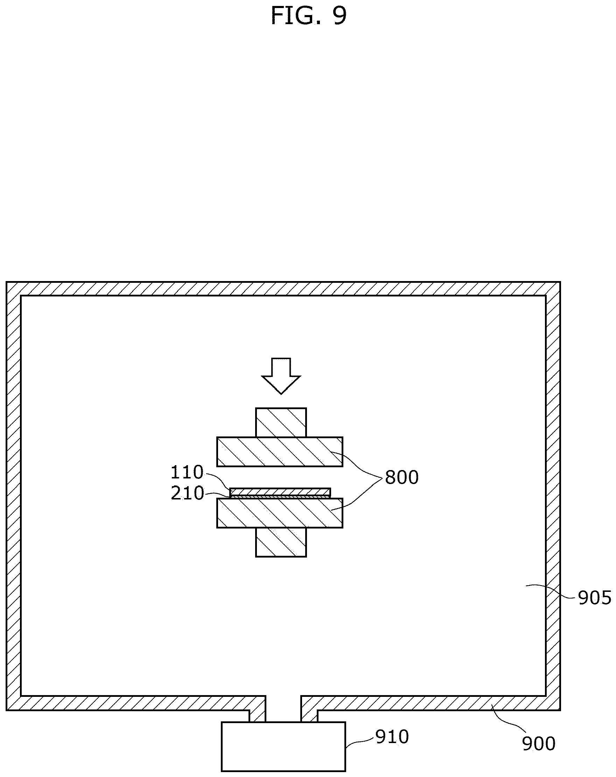

   FIG. 9 is a schematic diagram for explaining Example 1 of a method for pressing a body to be compressed in the first compression step according to Embodiment 1.
[FIG. 10]

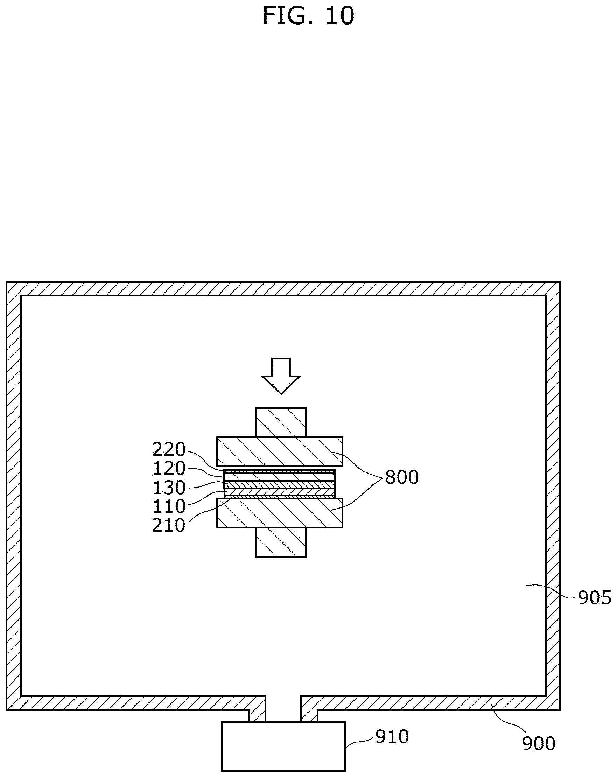

   FIG. 10 is a schematic diagram for explaining Example 1 of a method for pressing a body to be compressed in the second compression step according to Embodiment 1.
[FIG. 11]

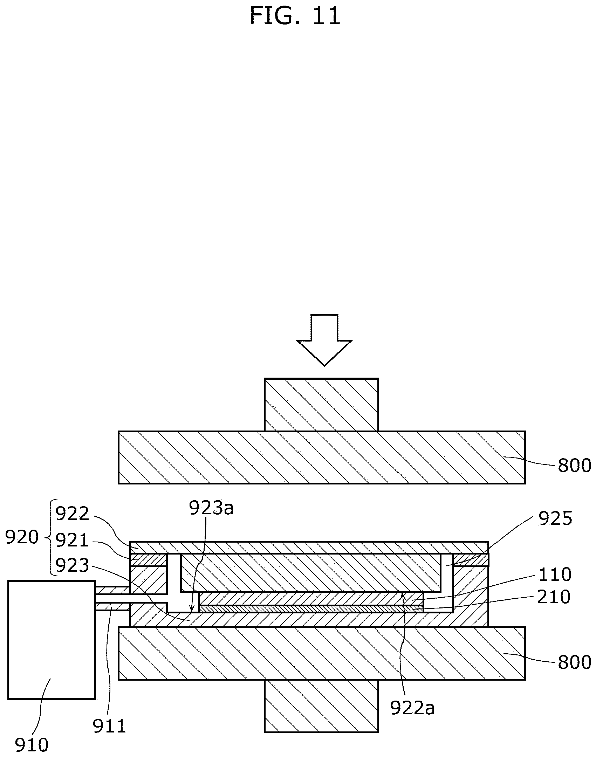

   FIG. 11 is a schematic diagram for explaining Example 2 of a method for pressing a body to be compressed in the first compression step according to Embodiment 1.
[FIG. 12]

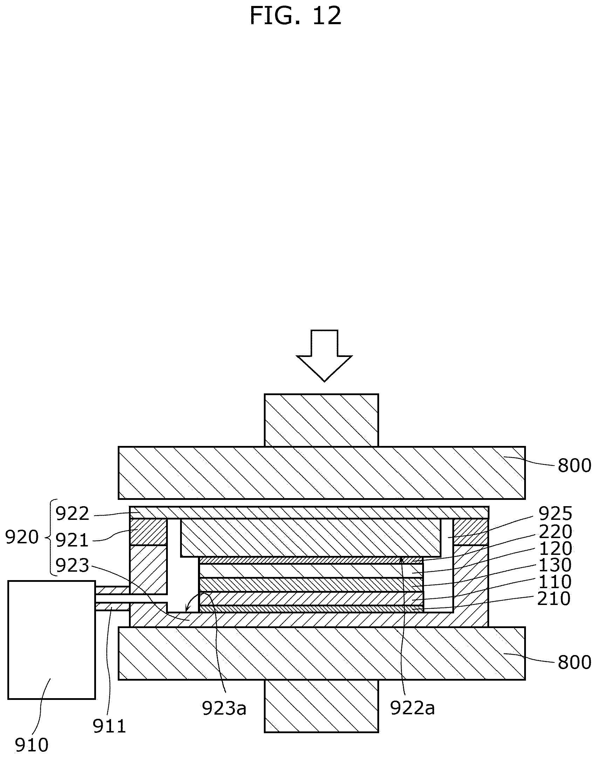

   FIG. 12 is a schematic diagram for explaining Example 2 of a method for pressing a body to be compressed in the second compression step according to Embodiment 1.
[FIG. 13]

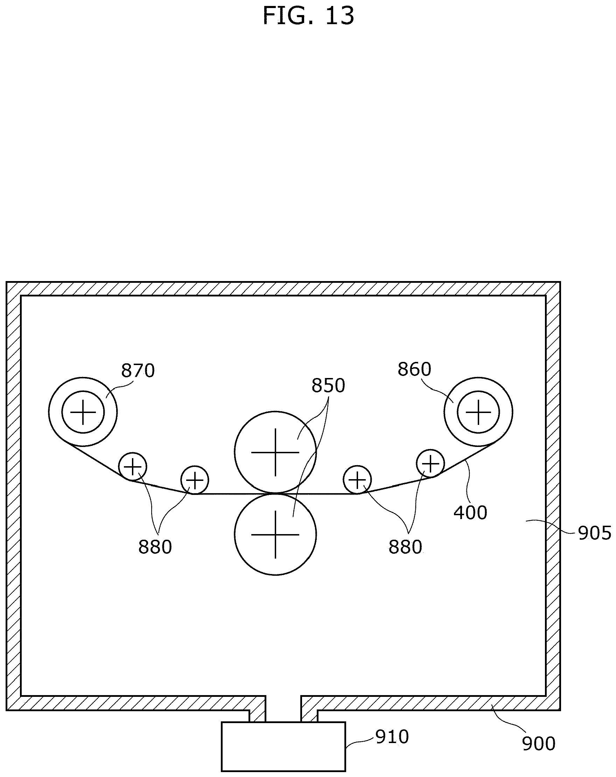

   FIG. 13 is a schematic diagram for explaining Example 3 of a method for pressing a body to be compressed in the first compression step according to Embodiment 1.
[FIG. 14]

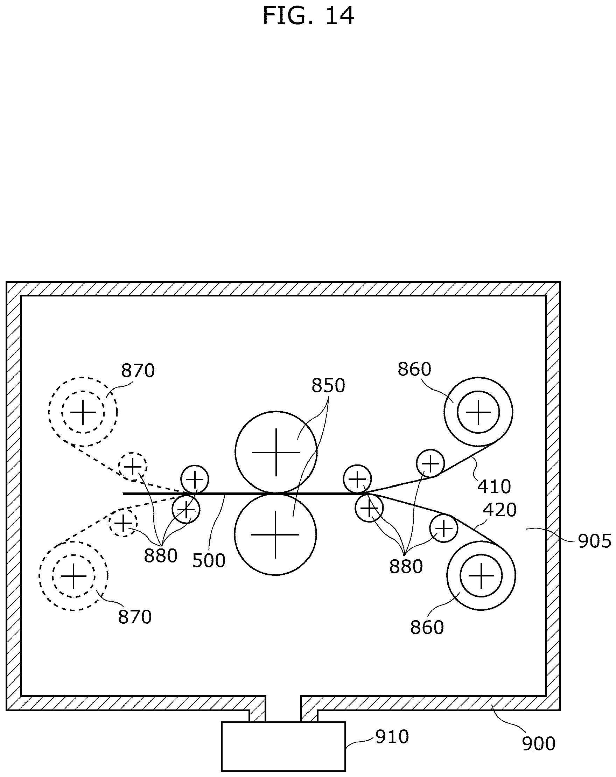

   FIG. 14 is a schematic diagram for explaining Example 3 of a method for pressing a body to be compressed in the second compression step according to Embodiment 1.
[FIG. 15]

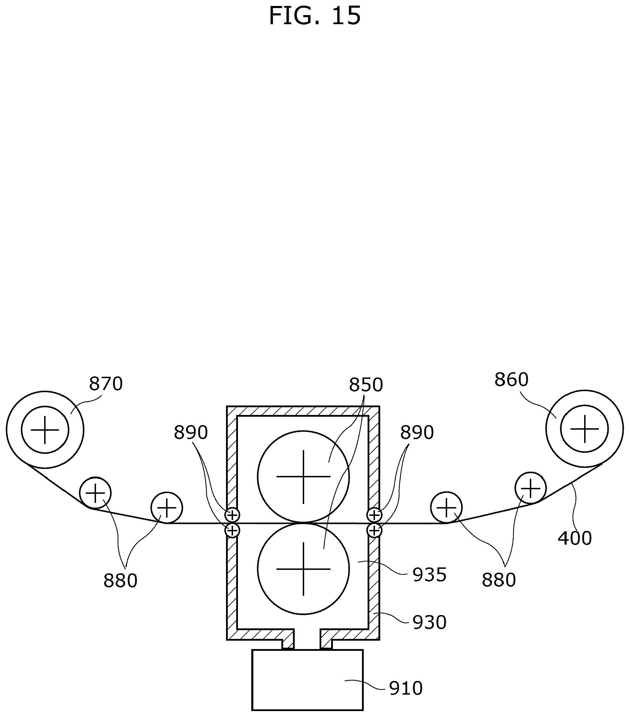

   FIG. 15 is a schematic diagram for explaining Example 4 of a method for pressing a body to be compressed in the first compression step according to Embodiment 1.
[FIG. 16]

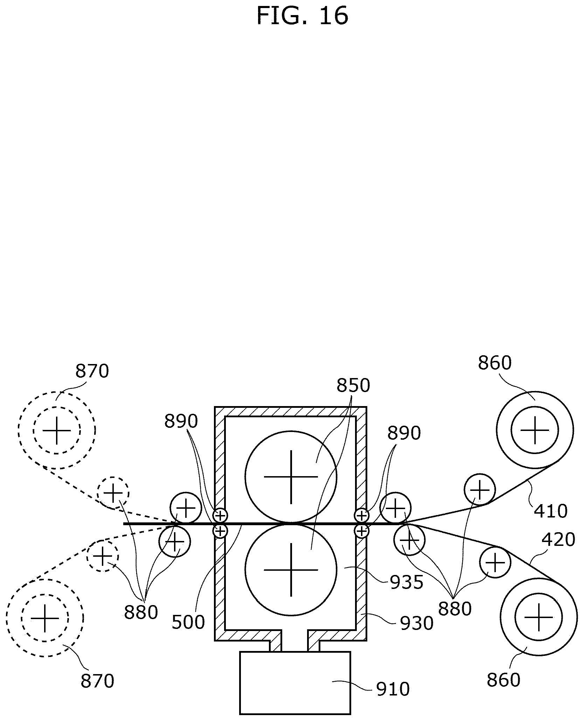

   FIG. 16 is a schematic diagram for explaining Example 4 of a method for pressing a body to be compressed in the second compression step according to Embodiment 1.
[FIG. 17]

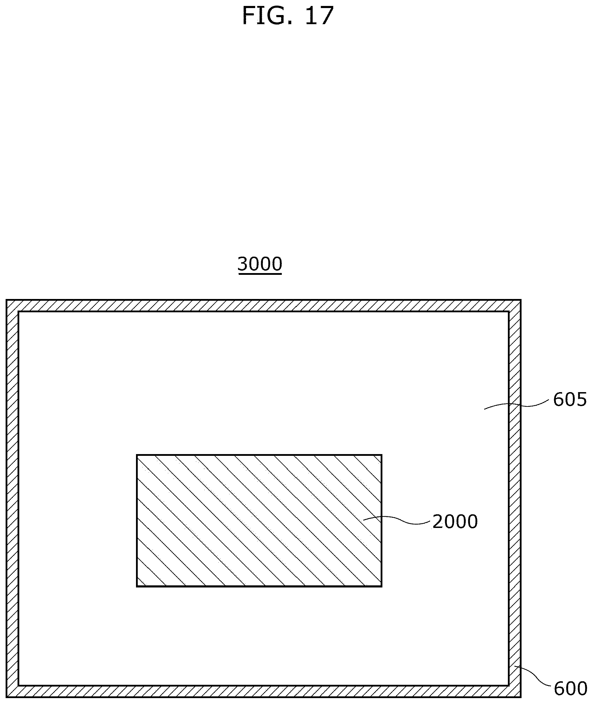

   FIG. 17 is a schematic diagram showing a schematic configuration of a battery system according to Embodiment 2.
[FIG. 18]

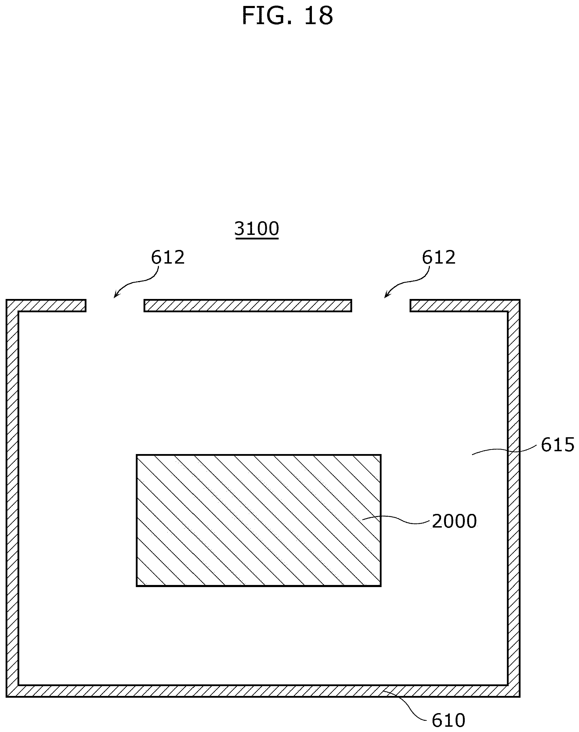

   FIG. 18 is a schematic diagram showing a schematic configuration of another battery system according to Embodiment 2.

### [Description of Embodiments]

### (Summary of the Present Disclosure)

A battery in one aspect of the present disclosure includes a power generation element including: a positive electrode layer containing a positive electrode active material and a first inorganic solid electrolyte; a negative electrode layer containing a negative electrode active material and a second inorganic solid electrolyte; and a solid electrolyte layer positioned between the positive electrode layer and the negative electrode layer and containing a third inorganic solid electrolyte, wherein a plurality of voids are present inside the power generation element, and an internal pressure of the plurality of voids is lower than 1 atm.

Accordingly, the battery in the present embodiment can achieve both high battery characteristics and high reliability. When the internal pressure of the voids is higher than that of the external environment, a force in the direction of releasing the contact between the positive electrode active materials, between the negative electrode active materials, or between the inorganic solid electrolytes, which is adjacent to the plurality of voids is exerted by the internal pressure of the voids, the voids expand, and the ionic and electronic conductivity inside the power generation element is reduced. For example, the expansion and contraction of the active material layer due to the insertion and desorption of ions during charging and discharging triggers a progressive expansion of the positive pressure voids and damages the power generation element. In the case of a battery containing an inorganic solid electrolyte, unlike a liquid-based battery filled with an electrolytic solution particularly with respect to ionic conductivity, damage to the power generation element due to the expansion of the voids tends to cause a significant decrease in ionic conductivity. In the battery according to the present aspect, since the voids have a negative pressure of lower than 1 atm, expansion of the voids can be suppressed.

In addition, the plurality of negative pressure voids not only do not serve as a starting point for the progressive degradation of the battery due to damage to the power generation element, but also attract materials around the plurality of voids to each other to enable the battery stronger than when no voids are present. In the present aspect, since the inorganic solid electrolyte is used as the material of the battery, the flexibility of the battery is small, and the force that attracts the material around the plurality of voids is transmitted without being dissipated. Accordingly, an external restraining force is applied to the power generation element even without providing a restraint or the like, and the ion and electron conductivity of the power generation element can be improved without lowering the battery capacity. Therefore, the battery in the present aspect can achieve both high battery characteristics and high reliability.

In addition, for example, the plurality of voids may be positioned along grain boundaries of at least one of the first inorganic solid electrolyte, the second inorganic solid electrolyte, or the third inorganic solid electrolyte.

This can improve the stability of the grain boundaries of the inorganic solid electrolyte.

In addition, for example, at least one of the plurality of voids may be present inside at least one of the positive electrode layer or the negative electrode layer.

This can suppress damage to the power generation element due to changes in the volume of the active material during charging and discharging.

In addition, for example, at least one of the plurality of voids may be positioned on a surface of at least one of the positive electrode layer, the negative electrode layer, or the solid electrolyte layer.

This can suppress delamination at interfaces between layers of the power generation elements caused by a plurality of voids.

In addition, for example, the internal pressure of the plurality of voids may be lower than or equal to 0.1 atm.

This can further suppress damage to the power generation element caused by the plurality of voids.

In addition, for example, an average of respective maximum widths of the plurality of voids may be less than or equal to 10 µm.

This can suppress the influence of the plurality of voids that impede the conduction of ions or electrons in the power generation element.

In addition, for example, a density of at least one of the positive electrode layer, the negative electrode layer, or the solid electrolyte layer may be greater than or equal to 90% of a material theoretical density.

This can improve the battery characteristics of the battery.

In addition, a battery system according to one aspect of the present disclosure includes a container including an internal space that serves as a reduced-pressure environment; and the battery described above, which is disposed in the internal space.

Accordingly, since the battery system includes the battery described above, even if the internal space of the container serves as a reduced-pressure environment, it is difficult for the plurality of voids to expand, and damage to the power generation element can be suppressed.

In addition, for example, a pressure of the reduced-pressure environment may be lower than or equal to 0.95 atm.

Accordingly, even if the battery is disposed in a reduced-pressure environment of 0.95 atm or lower, it is difficult for the plurality of voids to expand, and damage to the power generation element can be suppressed.

In addition, for example, the internal pressure of the plurality of voids may be lower than or equal to the pressure of the reduced-pressure environment.

This can suppress damage to the power generation element starting from the plurality of voids. In addition, the plurality of voids can exert a force that attracts the material of the power generation element inward.

In addition, a method for manufacturing a battery in one aspect of the present disclosure includes: a positive electrode layer containing a positive electrode active material and a first inorganic solid electrolyte; a negative electrode layer containing a negative electrode active material and a second inorganic solid electrolyte; and a solid electrolyte layer positioned between the positive electrode layer and the negative electrode layer and containing a third inorganic solid electrolyte, and the method includes: pressing a body to be compressed including at least one of the positive electrode layer, the negative electrode layer, or the solid electrolyte layer in a reduced-pressure atmosphere.

Accordingly, the body to be compressed can be compressed and densified by pressing, and also the internal pressure of the isolated voids formed inside the body to be compressed due to pressing can be reduced to a negative pressure of lower than 1 atm. Some of the voids inside the body to be compressed before pressing are connected to the atmosphere outside the body to be compressed by fine connection paths. Due to the progress of densification due to compression of the body to be compressed, most of the connection paths are blocked and the residual gas in the voids loses its outlet. After that, the internal pressure of the voids increases as the density increases. Therefore, for example, if the atmosphere outside the body to be compressed is normal pressure, a large number of high-pressure voids exceeding 1 atm are formed inside the body to be compressed at the completion of the compression step, and these voids can be the starting point for damage to the body to be compressed during charging and discharging, etc., and can destroy the ion and electron conductive paths. In contrast, in the method for manufacturing a battery in the present aspect, since the atmosphere outside the body to be compressed is a reduced-pressure atmosphere, the gas in the voids of the body to be compressed before pressing can be exhausted through the connection paths. Therefore, even after most of the connection paths are blocked by the progress of densification due to compression of the body to be compressed and the voids are cut off from the atmosphere outside the body to be compressed, the increase in internal pressure of the voids due to the progress of densification can be made small. Accordingly, the internal pressure of the voids remaining at the completion of the compression step can be kept at a negative pressure or a relatively small positive pressure, so that the progress of degradation of the battery to be manufactured can be reduced by suppressing the destruction of the conductive paths due to the damage of the body to be compressed caused by voids.

In addition, a method for manufacturing a battery according to one aspect of the present disclosure is a method for manufacturing a battery including a positive electrode layer, a negative electrode layer, and a solid electrolyte layer positioned between the positive electrode layer and the negative electrode layer, and the method includes: pressing a body to be compressed in a reduced-pressure atmosphere, the body to be compressed being formed by stacking the positive electrode layer and the negative electrode layer to face each other with the solid electrolyte layer interposed therebetween.

Accordingly, each layer of the body to be compressed can be compression-bonded by pressing, and also the internal pressure of the voids formed at interfaces between layers of the body to be compressed can be reduced to a negative pressure of 1 atm or lower. Voids due to the surface roughness of each layer are present at the boundaries between the layers of the body to be compressed at the start of the compression step. These voids are connected to the atmosphere outside the body to be compressed by fine connection paths. As the compression bonding progresses, most of the connection paths are blocked and the residual gas in the voids loses its outlet. After that, the internal pressure of the voids increases as the compression welding progresses. Therefore, for example, if the atmosphere outside the body to be compressed is normal pressure, a large number of high-pressure voids are formed along the interfaces of the layers of the body to be compressed at the completion of the compression step, and these voids can be the starting point for damage to the body to be compressed during charging and discharging, and can destroy the ion and electron conductive paths between layers of the body to be compressed. In contrast, in the method for manufacturing a battery according to the present aspect, since the atmosphere outside the body to be compressed is a reduced-pressure atmosphere, the gas in the voids at the interfaces of layers of the body to be compressed before compression bonding can be exhausted through the connection paths. Therefore, even after most of the connection paths are blocked by the progress of compression bonding of the body to be compressed and the voids are cut off from the atmosphere outside the body to be compressed, the increase in internal pressure of the voids due to the progress of compression bonding can be made small. Accordingly, the internal pressure of the voids remaining at the completion of the compression step can be kept at a negative pressure or a relatively small positive pressure, so that the progress of degradation of the battery to be manufactured can be reduced by suppressing the destruction of the conductive paths due to the damage of the body to be compressed caused by voids.

In addition, for example, a pressure of the reduced-pressure atmosphere may be lower than or equal to 0.1 atm.

Accordingly, the internal pressure of the voids formed by the compression step can be made lower.

In addition, for example, the pressure of the pressing may be higher than or equal to 10 MPa.

This can further improve the battery characteristics of the battery to be manufactured.

In addition, for example, in the pressing, the body to be compressed is disposed in an airtight container, the reduced-pressure atmosphere is created in the airtight container, and then the body to be compressed is pressed from outside the airtight container, the airtight container includes a deformation portion configured by an elastic material that is deformed by the pressing, and a pressure of the pressing from the outside of the airtight container may be applied to the body to be compressed by deforming the deformation portion by the pressing.

Accordingly, the body to be compressed can be pressed from the outside of the airtight container, so that there is no need to install the device for pressing itself in a reduced-pressure atmosphere, and the device for pressing can be made smaller.

Hereinafter, embodiments of the present disclosure will be described with reference to the drawings.

It should be noted that the embodiments described below are all comprehensive or specific examples. Numerical values, shapes, materials, components, arrangement positions and connection forms of components, steps, order of steps, and the like shown in the following embodiments are examples, and are not intended to limit the present disclosure. In addition, among the components in the following embodiments, components not described in independent claims will be described as optional components.

In addition, each figure is a schematic diagram and is not necessarily precisely illustrated. Therefore, for example, scales and the like do not necessarily match in each figure. In addition, in each figure, substantially the same configurations are denoted by the same reference numerals, and overlapping descriptions are omitted or simplified.

In addition, in the present specification, terms that indicate the relationship between elements such as parallel, terms that indicate the shape of elements such as rectangle, and numerical ranges are not expressions that express only strict meanings, but expressions that mean to include a difference in a substantially equivalent range, for example, a difference of about several percent.

In addition, in the present specification, "planar view" means the case when viewed from the normal direction of the main surface of the power generation element.

### [Embodiment 1]

### [Configuration]

First, the configuration of the battery according to the present embodiment will be described.

FIG. 1 is a cross-sectional view showing a schematic configuration of battery 1000 according to Embodiment 1.

As shown in FIG. 1, battery 1000 according to Embodiment 1 includes negative electrode current collector 210, positive electrode current collector 220, and power generation element 100. Battery 1000 is, for example, an all-solid battery.

Power generation element 100 is positioned between negative electrode current collector 210 and positive electrode current collector 220. Power generation element 100 includes positive electrode active material layer 120 containing a positive electrode active material and a first inorganic solid electrolyte, negative electrode active material layer 110 containing a negative electrode active material and a second inorganic solid electrolyte, and solid electrolyte layer 130 positioned between positive electrode active material layer 120 and negative electrode active material layer 110 and containing a third inorganic solid electrolyte. Negative electrode active material layer 110 and positive electrode current collector 220 face each other with solid electrolyte layer 130 interposed therebetween. Positive electrode active material layer 120 is an example of a positive electrode layer, and negative electrode active material layer 110 is an example of a negative electrode layer. In addition, in the present specification, the first inorganic solid electrolyte, the second inorganic solid electrolyte, and the third inorganic solid electrolyte may be collectively referred to simply as "inorganic solid electrolytes". The first inorganic solid electrolyte, the second inorganic solid electrolyte, and the third inorganic solid electrolyte are, for example, the same material, but may be different materials.

In addition, in the present specification, negative electrode current collector 210 and positive electrode current collector 220 may be collectively referred to simply as "current collectors", and negative electrode active material layer 110 and positive electrode active material layer 120 are collectively referred to simply as "active material layers".

A plurality of voids 250 are present inside power generation element 100. Details of the plurality of voids 250 will be described later.

Negative electrode active material layer 110 contains a negative electrode active material as an electrode material. As the negative electrode active material contained in negative electrode active material layer 110, for example, a negative electrode active material such as graphite or metallic lithium can be used. Various materials capable of extracting and inserting ions such as lithium (Li) or magnesium (Mg) can be used as materials of the negative electrode active material. The negative electrode active material is, for example, a particulate material.

In addition, negative electrode active material layer 110 further includes, for example, an inorganic solid electrolyte. As the inorganic solid electrolyte, for example, a sulfide solid electrolyte, an oxide solid electrolyte or the like can be used. As a sulfide solid electrolyte, for example, a mixture of lithium sulfide (Li₂S) and phosphorus pentasulfide (P₂S₅) can be used. An inorganic solid electrolyte is, for example, a particulate material. In addition, at least one of a conductive material such as acetylene black and the like or a binding binder such as polyvinylidene fluoride and the like may be further used as the material contained in negative electrode active material layer 110.

Negative electrode active material layer 110 can be produced by applying a paste-like paint in which the material contained in negative electrode active material layer 110 is kneaded together with a solvent onto the surface of negative electrode current collector 210 and drying it. The thickness of negative electrode active material layer 110 is, for example, at least 5 µm and at most 300 µm, but is not limited thereto.

Positive electrode active material layer 120 contains a positive electrode active material as an electrode material. The positive electrode active material is a material that constitutes the counter electrode of the negative electrode active material. For example, positive electrode active materials such as lithium cobaltate composite oxide (LCO), lithium nickelate composite oxide (LNO), lithium manganate composite oxide (LMO), lithium-manganese-nickel composite oxide (LMNO), lithium-manganese-cobalt composite oxide (LMCO), lithium-nickel-cobalt composite oxide (LNCO), and lithium-nickel-manganese-cobalt composite oxide (LNMCO) are used as the positive electrode active material contained in positive electrode active material layer 120. Various materials capable of withdrawing and inserting ions such as Li or Mg can be used as the material of the positive electrode active material. The positive electrode active material is, for example, a particulate material.

In addition, positive electrode active material layer 120 further includes, for example, an inorganic solid electrolyte. As the inorganic solid electrolyte, the materials exemplified as the inorganic solid electrolyte used for the negative electrode active material mentioned above can be used. In addition, the surface of the positive electrode active material may be coated with a solid electrolyte. In addition, at least one of a conductive material such as acetylene black and the like or a binding binder such as polyvinylidene fluoride and the like may be further used as the material contained in positive electrode active material layer 120.

Positive electrode active material layer 120 can be produced by applying a paste-like paint in which the material contained in positive electrode active material layer 120 is kneaded together with a solvent onto the surface of positive electrode current collector 220 and drying it. The thickness of positive electrode active material layer 120 is, for example, at least 5 µm and at most 300 µm, but is not limited thereto.

Solid electrolyte layer 130 is disposed between negative electrode active material layer 110 and positive electrode active material layer 120. Solid electrolyte layer 130 is in contact with each of negative electrode active material layer 110 and positive electrode active material layer 120. The size and shape in a plan view of solid electrolyte layer 130 may be the same as the size and shape in a plan view of negative electrode active material layer 110 and positive electrode active material layer 120, respectively. That is, the side surface of solid electrolyte layer 130 may be flush with each of the side surface of negative electrode active material layer 110 and the side surface of positive electrode active material layer 120.

Solid electrolyte layer 130 is a layer containing an electrolyte material. As the electrolyte material, generally known electrolytes for batteries can be used. The thickness of solid electrolyte layer 130 may be at least 5 µm and at most 300 µm, or may be at least 5 µm and at most 100 µm. It should be noted that although solid electrolyte layer 130 is one layer in the example shown in FIG. 1, power generation element 100 may have a structure in which a plurality of solid electrolyte layers 130 are stacked.

Solid electrolyte layer 130 contains an inorganic solid electrolyte as an electrolyte material. As the inorganic solid electrolyte, the materials exemplified as the inorganic solid electrolyte used for the negative electrode active material mentioned above can be used. Solid electrolyte layer 130 may contain a binding binder such as polyvinylidene fluoride and the like in addition to the electrolyte material.

In battery 1000, negative electrode active material layer 110, positive electrode active material layer 120, and solid electrolyte layer 130 are maintained in the form of parallel plates. Accordingly, it is possible to suppress the occurrence of cracks or collapse due to curvature. It should be noted that negative electrode active material layer 110, positive electrode active material layer 120, and solid electrolyte layer 130 may be combined and smoothly curved.

Negative electrode current collector 210 and positive electrode current collector 220 are disposed facing power generation element 100 so as to sandwich power generation element 100 therebetween. In a plan view, the outer peripheries of negative electrode current collector 210, positive electrode current collector 220, and power generation element 100 are, for example, the same. Each of negative electrode current collector 210 and positive electrode current collector 220 is a member having conductivity. Each of negative electrode current collector 210 and positive electrode current collector 220 may be, for example, a thin film having conductivity. As a material included in negative electrode current collector 210 and positive electrode current collector 220, for example, metals such as stainless steel (SUS), aluminum (Al), copper (Cu), and nickel (Ni) can be used.

Negative electrode current collector 210 is disposed on the negative electrode active material layer 110 side of power generation element 100. Negative electrode current collector 210 is disposed, for example, in contact with negative electrode active material layer 110. As negative electrode current collector 210, for example, metal foil such as SUS foil, Al foil, Cu foil, and Ni foil can be used. The thickness of negative electrode current collector 210 is, for example, at least 5 µm and at most 100 µm, but is not limited thereto. It should be noted that negative electrode current collector 210 may include, for example, a current collector layer that is a layer containing a conductive material in a portion in contact with negative electrode active material layer 110.

Positive electrode current collector 220 is disposed on the positive electrode active material layer 120 side of power generation element 100. Positive electrode current collector 220 is disposed, for example, in contact with positive electrode active material layer 120. As positive electrode current collector 220, for example, metal foil such as SUS foil, Al foil, Cu foil, and Ni foil can be used. The thickness of positive electrode current collector 220 is, for example, at least 5 µm and at most 100 µm, but is not limited thereto. It should be noted that positive electrode current collector 220 may include, for example, a current collector layer that is a layer containing a conductive material in a portion in contact with positive electrode active material layer 120.

At least one of negative electrode active material layer 110, solid electrolyte layer 130, or positive electrode active material layer 120 is formed, for example, through a first compression step in which pressing is performed under a reduced-pressure atmosphere in order to increase the density of each layer. Accordingly, ion conductivity and electronic conductivity can be ensured inside each layer of power generation element 100, and battery characteristics can be improved. In the present embodiment, for example, all of negative electrode active material layer 110, solid electrolyte layer 130, and positive electrode active material layer 120 are formed through the first compression step. In the present specification, "pressing" means applying mechanical stress to a body to be compressed.

In addition, power generation element 100 is formed, for example, through a second compression step in which pressing is performed under a reduced-pressure atmosphere in order to compress and bind the layers of power generation element 100. Accordingly, ionic conductivity and electronic conductivity can be ensured at interfaces between layers of power generation element 100, and battery characteristics can be improved.

Details of the first compression step and the second compression step will be described later.

In battery 1000, a plurality of voids 250 are present inside power generation element 100. The plurality of voids 250 are not connected to the outside of power generation element 100 and are present as isolated voids inside power generation element 100. That is, the plurality of voids 250 are independent air bubbles (hollow portions) positioned inside power generation element 100.

The plurality of voids 250 include voids 250 formed by, for example, blocking connection paths to the outside in gaps between material particles such as inorganic solid electrolytes contained in each layer of power generation element 100 in the first compression step. Thus, unlike an electrolyte such as a gel, grain boundaries are formed in the inorganic solid electrolyte, and the plurality of voids 250 include voids 250 positioned along the grain boundaries of the inorganic solid electrolyte included in each layer. In addition, the plurality of voids 250 include voids 250 positioned inside at least one of negative electrode active material layer 110, positive electrode active material layer 120, or solid electrolyte layer 130. In the example shown in FIG. 1, the plurality of voids 250 includes voids 250 positioned inside any of negative electrode active material layer 110, positive electrode active material layer 120, and solid electrolyte layer 130.

In addition, the plurality of voids 250 include, for example, voids 250 formed by blocking connection paths to the outside in the voids between layers of power generation element 100 in the second compression step. Thus, the plurality of voids 250 includes voids 250 positioned on the surface of at least one of negative electrode active material layer 110, positive electrode active material layer 120, or solid electrolyte layer 130. That is, the plurality of voids 250 include voids 250 formed so as to be in contact with the surface of at least one of negative electrode active material layer 110, positive electrode active material layer 120, or solid electrolyte layer 130. In the example shown in FIG. 1, the plurality of voids 250 includes voids 250 positioned on the surfaces of any of negative electrode active material layer 110, positive electrode active material layer 120, and solid electrolyte layer 130.

In the example shown in FIG. 1, at least one of all the plurality of voids 250 is positioned inside at least one of negative electrode active material layer 110, positive electrode active material layer 120, or solid electrolyte layer 130, and at least another thereof is positioned on the surface of at least one of negative electrode active material layer 110, positive electrode active material layer 120, or solid electrolyte layer 130. It should be noted that both or either of voids 250 positioned inside at least one of negative electrode active material layer 110, positive electrode active material layer 120, or solid electrolyte layer 130, and voids 250 positioned on at least one surface of negative electrode active material layer 110, positive electrode active material layer 120, or solid electrolyte layer 130 may be present.

Here, batteries according to comparative examples will be described.

First, battery 1001X formed without a pressing step such as the first compression step and the second compression step will be described. FIG. 2 is a cross-sectional view showing a schematic configuration of battery 1001X according to Comparative Example 1. As schematically shown in FIG. 2, in power generation element 100 of battery 1001X, a plurality of voids 251 and connection paths 251a connecting the plurality of voids 251 and the outside of battery 1001X are present. The plurality of voids 251 communicate with the outside of battery 1001X through connection paths 251a. For that reason, the internal pressure of the plurality of voids 251 is equal to the external pressure, that is, atmospheric pressure = 1 atm. Since battery 1001X is not formed through a pressing step, it has a high resistance and a low capacity without increasing the density and increasing the contact area between particles.

Next, battery 1002X formed through the step of pressing at low pressure will be described. Battery 1002X is formed through a step of pressing each layer of power generation element 100 at a low pressure of, for example, 1 MPa or less. FIG. 3 is a cross-sectional view showing a schematic configuration of battery 1002X according to Comparative Example 2. As schematically shown in FIG. 3, in power generation element 100 of battery 1002X, a plurality of voids 252 and connection paths 252a connecting to the plurality of voids 252 are present. Some of the plurality of voids 252 are in communication with the outside of battery 1002X via connection paths 252a, but some other voids 252 out of the plurality of voids 252 are isolated voids 252 because connection paths 252a connecting to voids 252 are not connected to the outside of battery 1002X. The inside of voids 252 communicating with the outside of battery 1002X has the same pressure as the outside, but isolated voids 252 are compressed even after being isolated from the outside of battery 1002X by the pressing step, and the volume of the plurality of voids 252 is reduced, resulting in a higher pressure than the outside. Since battery 1002X is not formed through a pressing step with a sufficient pressure, the densification and the increase in the contact area between particles are insufficient, and the resistance is high and the capacity is low.

Next, battery 1003X formed through a step of pressing at a pressure higher than that of battery 1002X will be described. Battery 1003X is formed, for example, through a step of pressing each layer of power generation element 100 at a high pressure of 10 MPa or more. FIG. 4 is a cross-sectional view showing a schematic configuration of battery 1003X according to Comparative Example 3. As schematically shown in FIG. 4, in power generation element 100 of battery 1003X, a plurality of isolated voids 253 that do not communicate with the outside of battery 1003X are present. The plurality of voids 253 are compressed even after being isolated from the outside of battery 1003X by the pressing step, and the volume of the plurality of voids 253 is reduced, resulting in a higher pressure than the outside. Thus, many high pressure sources are scattered inside power generation element 100.

Since battery 1003X is formed through a pressing step at a high pressure, high density and an increase in the contact area between particles are achieved, resulting in battery 1003X with low resistance in the initial stage after production, and with high capacity. However, in battery 1003X formed in this way, not only during release from the compression force in the pressing step, but also due to changes in the volume of the active material caused by charging and discharging, that is, insertion and desorption of ions, changes in temperature and pressure in the environment where battery 1003X is used, and change in the internal stress of power generation element 100 due to the external forces applied to battery 1003X and the like, damage to power generation element 100 occurs starting from a plurality of voids 253. FIG. 5 is a diagram for explaining damage that occurs in battery 1003X. As schematically shown in FIG. 5, a plurality of high-pressure voids 253 spread inside positive electrode active material layer 120, negative electrode active material layer 110, and solid electrolyte layer 130 as well as between the layers of power generation element 100 to form a plurality of voids 254, promoting microfractures typified by intergranular delamination and interlayer delamination. As a result, deterioration of the battery characteristics of battery 1003X occurs. For that reason, it is difficult to maintain the battery characteristics over a long period of time only by performing a step of pressing at high pressure to form a battery, and the reliability of battery 1003X is low.

In contrast, in battery 1000, the plurality of voids 250 have a negative pressure lower than the atmospheric pressure in order to suppress deterioration of battery characteristics caused by the plurality of voids 250 which are present inside power generation element 100. That is, the internal pressure of the plurality of voids 250 is less than 1 atm. Due to the presence of such a plurality of voids 250 having the internal pressure of less than 1 atm, when the compression force is released in the first compression step and the second compression step, when the volume of the active material changes, when the usage environment of battery 1000 changes, when an external force is applied to battery 1000, and the like, the negative pressure inside the plurality of voids acts in the direction of suppressing intergranular delamination and interlayer delamination, so that deterioration of battery characteristics of battery 1000 can be suppressed. In particular, the presence of the plurality of voids 250 having a negative pressure in negative electrode active material layer 110 and positive electrode active material layer 120 can suppress damage to power generation element 100 due to the change in volume of the active material during charging and discharging.

In addition, not only when the internal pressure of the plurality of voids 250 is higher than the atmospheric pressure, but also even in the absence of the plurality of voids 250, the presence of the plurality of voids 250 having a negative internal pressure serves as a force that attracts the material of each layer of power generation element 100, so that deterioration of the battery characteristics of battery 1000 can be suppressed. In addition, the presence of a plurality of voids 250 having an internal negative pressure serves as a force that attracts the material of each layer of power generation element 100, so that the resistance at the grain boundaries of the material in each layer and between layers can be reduced, and the battery characteristics are improved. In addition, an external restraining force is applied to power generation element 100 even without a restraint or the like, and a decrease in battery capacity per unit volume and per unit weight due to the provision of a restraint or the like can be avoided.

A plurality of voids 250 are present inside at least one of positive electrode active material layer 120 or negative electrode active material layer 110. Accordingly, damage to power generation element 100 due to change in volume of the active material during charging and discharging can be suppressed. In addition, the plurality of voids 250 can attract the material of the surrounding active material layer to lower the resistance in the active material layer.

From the viewpoint of increasing the reliability of battery 1000, the internal pressure of the plurality of voids 250 may be 0.8 atm or less, 0.5 atm or less, or 0.1 atm or less. In addition, the internal pressure of the plurality of voids 250 is, for example, greater than 0 atm. It should be noted that in the present specification, the pressure such as the internal pressure of the plurality of voids 250 is the pressure at normal temperature. Normal temperature is, for example, 23 °C. In addition, in the present specification, the numerical values of the pressure such as the internal pressure of the plurality of voids 250 are numerical values in absolute pressure.

Such a plurality of voids 250 having an internal pressure of less than 1 atm are formed, for example, in the first compression step and/or the second compression step in which pressing is performed in a reduced-pressure atmosphere. The density (specifically, apparent density, weight divided by apparent volume) of at least one of positive electrode active material layer 120, negative electrode active material layer 110, or solid electrolyte layer 130 formed through the first compression step and/or the second compression step is, for example, 90% or more of the material theoretical density, and may be 95% or more. Accordingly, the battery characteristics of battery 1000 can be improved. The densities of all of positive electrode active material layer 120, negative electrode active material layer 110, and solid electrolyte layer 130 may be 90% or more of the material theoretical densities of the respective layers.

The average of the respective maximum widths of the plurality of voids 250 is, for example, 10 µm or less, and may be 1 µm or less. Accordingly, the plurality of voids 250 can suppress the impeding effect of ion or electron conduction in power generation element 100. The respective maximum width of the plurality of voids 250 are measured from the plurality of voids 250 observed, for example, by observing the cross section of battery 1000 with an electron microscope or the like.

As described above, battery 1000 can achieve both high battery characteristics and high reliability.

### [Manufacturing method]

Next, a method for manufacturing battery 1000 according to the present embodiment will be described. The method for manufacturing battery 1000 includes, for example, a first compression step and a second compression step.

In the first compression step, a body to be compressed including at least one of positive electrode active material layer 120, negative electrode active material layer 110, or solid electrolyte layer 130 is pressed in a reduced-pressure atmosphere of less than 1 atm. Accordingly, at least one of positive electrode active material layer 120, negative electrode active material layer 110, or solid electrolyte layer 130 can be densified. Pressing in a reduced-pressure atmosphere means performing pressing in a space that has been reduced in a reduced pressure state of less than 1 atm by, for example, evacuating gas from the space.

In addition, inside the body to be compressed before pressing in the first compression step, there are voids connected by fine connection paths to the atmosphere outside the body to be compressed, such as void 251 connected to connection path 251a shown in FIG. 2. These voids are caused by interstices between material particles of the body to be compressed. As the compression of the body to be compressed progresses, most of the connection paths are blocked and the residual gas in the voids loses its outlet. After that, the internal pressure of the voids increases with the progress of densification by compression. For example, if the volume of the voids becomes half or less after the connection paths are blocked, the internal pressure of the voids becomes 2 atm or more. Therefore, for example, if the atmosphere outside the body to be compressed is normal pressure, a large number of high-pressure voids are formed inside the body to be compressed at the completion of the compression step, and these voids can be the starting point for damage to the body to be compressed during charging and discharging, etc., and can destroy the ion and electron conductive paths. In contrast, in the first compression step, since the atmosphere outside the body to be compressed is a reduced-pressure atmosphere, the gas in the voids of the body to be compressed before pressing can be exhausted through the connection paths. Therefore, even after most of the connection paths are blocked by the progress of compression of the body to be compressed and the voids are cut off from the atmosphere outside the body to be compressed, the increase in internal pressure of the voids due to the progress of compression can be made small. Accordingly, for example, the internal pressure of the plurality of voids 250 remaining at the completion of the first compression step can be reduced to a negative pressure of less than 1 atm.

In the second compression step, the body to be compressed in which positive electrode active material layer 120 and negative electrode active material layer 110 are stacked so as to face each other with solid electrolyte layer 130 interposed therebetween is pressed in a reduced-pressure atmosphere of less than 1 atm. Accordingly, positive electrode active material layer 120 and negative electrode active material layer 110 can be compression-bonded with solid electrolyte layer 130 interposed therebetween.

In addition, at the boundary between the layers of the body to be compressed before pressing in the second compression step, there are voids connected by fine connection paths to the atmosphere outside the body to be compressed, such as void 251 connected to connection path 251a shown in FIG. 2. These voids are caused by the surface roughness of each layer of the body to be compressed. As the compression bonding progresses, most of the connection paths are blocked and the residual gas in the voids loses its outlet. After that, the internal pressure of the voids increases with the progress of the compression bonding. Therefore, for example, if the atmosphere outside the body to be compressed is normal pressure, a large number of high-pressure voids are formed along interfaces between layers of the body to be compressed at the completion of the compression step, and these voids can be the starting point for damage to the body to be compressed during charging and discharging, and can destroy the conductive paths between the layers of the body to be compressed. In contrast, in the second compression step, since the atmosphere outside the body to be compressed is a reduced-pressure atmosphere, the gas in the voids at the boundary between the layers of the body to be compressed before compression bonding can be exhausted through the connection paths. Therefore, even after most of the connection paths are blocked by the progress of compression bonding of the body to be compressed and the voids are cut off from the atmosphere outside the body to be compressed, the increase in internal pressure of the voids due to the progress of compression bonding can be made small. Accordingly, the internal pressure of the plurality of voids 250 remaining at the completion of the compression step can be reduced to a negative pressure.

It should be noted that the method for manufacturing battery 1000 may include only one of the first compression step and the second compression step. Alternatively, battery 1000 may be manufactured by the method for manufacturing including steps other than the first compression step and the second compression step.

In the method for manufacturing battery 1000, for example, a stacked body is formed as a body to be compressed which is pressed in the first compression step and the second compression step. FIG. 6A, FIG. 6B, FIG. 7A, FIG. 7B, and FIG. 8 are cross-sectional views showing a schematic configuration of a stacked body formed by the method for manufacturing battery 1000. FIG. 6A, FIG. 6B, FIG. 7A, FIG. 7B, and FIG. 8 omit the illustration of voids present in each layer.

In the method for manufacturing battery 1000, for example, at least one of stacked body 310, stacked body 320, stacked body 330, stacked body 340, and stacked body 350 shown in FIG. 6A, FIG. 6B, FIG. 7A, FIG. 7B, and FIG. 8 is formed.

Stacked body 310 shown in FIG. 6A is formed, for example, by stacking negative electrode active material layer 110 on negative electrode current collector 210. Stacked body 320 shown in FIG. 6B is formed, for example, by stacking positive electrode active material layer 120 on positive electrode current collector 220. Stacked body 330 shown in FIG. 7A is formed, for example, by further stacking solid electrolyte layer 130 on negative electrode active material layer 110 of stacked body 310 shown in FIG. 6A. Stacked body 340 shown in FIG. 7B is formed, for example, by further stacking solid electrolyte layer 130 on positive electrode active material layer 120 of stacked body 320 shown in FIG. 6B. As shown in FIG. 8, stacked body 350 is formed by stacking negative electrode active material layer 110, solid electrolyte layer 130, positive electrode active material layer 120, and positive electrode current collector 220 on negative electrode current collector 210 in this order. It should be noted that the stacking configuration and forming method of a stacked body are not restricted to the above-mentioned example. For example, the stacked body may have a stacked configuration in which at least one of positive electrode current collector 220 or negative electrode current collector 210 is removed from stacked body 350.

Each of the above-mentioned stacked bodies is formed by applying a paste-like paint obtained by kneading the respective materials of negative electrode active material layer 110, positive electrode active material layer 120, and solid electrolyte layer 130 together with a solvent onto the surface of the current collector or each layer, and drying the paint.

In the first compression step, for example, at least one of stacked body 310 or stacked body 320 shown in FIG. 6A or FIG. 6B is pressed in a reduced-pressure atmosphere. Accordingly, since the materials included in positive electrode active material layer 120 and negative electrode active material layer 110 are densified and the contact area between particles is increased, the resistance of ions and electrons in each layer can be reduced. In addition, since the surfaces of positive electrode active material layer 120 and negative electrode active material layer 110 can be made smooth, solid electrolyte layer 130 having a thin and uniform thickness can be formed on positive electrode active material layer 120 and negative electrode active material layer 110, and the risk of short circuits can be reduced. In addition, by using stacked body 310 as a body to be compressed, a plurality of voids 250 are formed inside negative electrode active material layer 110. In addition, by using stacked body 320 as a body to be compressed, a plurality of voids 250 are formed inside positive electrode active material layer 120.

In addition, in the first compression step, for example, at least one of stacked body 330 or stacked body 340 shown in FIG. 7A or FIG. 7B is pressed in a reduced-pressure atmosphere as a body to be compressed. Accordingly, the density of the materials included in positive electrode active material layer 120, negative electrode active material layer 110, and solid electrolyte layer 130 is increased, and the contact area between particles is increased, so that ion and electron resistances within each layer can be reduced. In addition, the adhesion between positive electrode active material layer 120 or negative electrode active material layer 110 and solid electrolyte layer 130 can be enhanced. In addition, by using stacked body 330 as a body to be compressed, a plurality of voids 250 are formed inside each of negative electrode active material layer 110 and solid electrolyte layer 130. In addition, by using stacked body 340 as a body to be compressed, a plurality of voids 250 are formed inside each of positive electrode active material layer 120 and solid electrolyte layer 130.

In addition, in the first compression step, for example, stacked body 350 shown in FIG. 8 is pressed in a reduced-pressure atmosphere as a body to be compressed. Accordingly, the density of the materials included in positive electrode active material layer 120, negative electrode active material layer 110, and solid electrolyte layer 130 can be increased, and the contact area between particles can be increased, so that ion and electron resistances within each layer can be reduced. In addition, positive electrode active material layer 120 and negative electrode active material layer 110 can be firmly adhered to each other with solid electrolyte layer 130 interposed therebetween. In addition, by using stacked body 350 as a body to be compressed, a plurality of voids 250 are formed inside each of negative electrode active material layer 110, positive electrode active material layer 120 and solid electrolyte layer 130. In addition, since stacked body 350 has a configuration in which positive electrode active material layer 120 and negative electrode active material layer 110 are stacked so as to face each other with solid electrolyte layer 130 interposed therebetween, the first compression step and the second compression step are performed simultaneously by pressing stacked body 350 as a body to be compressed.

In addition, pressing is performed in a reduced-pressure atmosphere in the first compression step as described above, so that the internal pressure of the plurality of voids 250 formed inside power generation element 100 due to the first compression step can be reduced to less than 1 atm.

In addition, in the second compression step, for example, a body to be compressed formed by stacking stacked body 310 and stacked body 340 shown in FIG. 6A and FIG. 7B so that positive electrode active material layer 120 and negative electrode active material layer 110 are stacked facing each other with solid electrolyte layer 130 interposed therebetween is pressed in a reduced-pressure atmosphere. Specifically, stacked body 310 and stacked body 340 are stacked so that negative electrode active material layer 110 of stacked body 310 and solid electrolyte layer 130 of stacked body 340 face each other. Accordingly, negative electrode active material layer 110 of stacked body 310 and solid electrolyte layer 130 of stacked body 340 are compression-bonded, and the adhesion between negative electrode active material layer 110 and solid electrolyte layer 130 can be enhanced. In addition, accordingly, a plurality of voids 250 are formed along the interface between negative electrode active material layer 110 and solid electrolyte layer 130 that are compression-bonded.

In addition, in the second compression step, for example, a body to be compressed formed by stacking stacked body 320 and stacked body 330 shown in FIG. 6B and FIG. 7A so that positive electrode active material layer 120 and negative electrode active material layer 110 are stacked facing each other with solid electrolyte layer 130 interposed therebetween is pressed in a reduced-pressure atmosphere. Specifically, stacked body 320 and stacked body 330 are stacked so that positive electrode active material layer 120 of stacked body 320 and solid electrolyte layer 130 of stacked body 330 face each other. Accordingly, positive electrode active material layer 120 of stacked body 320 and solid electrolyte layer 130 of stacked body 330 are compression-bonded, and the adhesion between positive electrode active material layer 120 and solid electrolyte layer 130 can be enhanced. In addition, accordingly, a plurality of voids 250 are formed along the interface between positive electrode active material layer 120 and solid electrolyte layer 130 that are compression-bonded.

In addition, in the second compression step, for example, a body to be compressed formed by stacking stacked body 330 and stacked body 340 shown in FIG. 7A and FIG. 7B so that positive electrode active material layer 120 and negative electrode active material layer 110 are stacked facing each other with solid electrolyte layer 130 interposed therebetween is pressed in a reduced-pressure atmosphere. Specifically, stacked body 330 and stacked body 340 are stacked so that solid electrolyte layer 130 of stacked body 330 and solid electrolyte layer 130 of stacked body 340 face each other. Accordingly, solid electrolyte layer 130 of stacked body 330 and solid electrolyte layer 130 of stacked body 340 are compression-bonded, and the adhesion between both solid electrolyte layers 130 can be enhanced. In addition, accordingly, a plurality of voids 250 are formed along the interface between two solid electrolyte layers 130 that are compression-bonded.

As described above, in the second compression step, pressing is performed in a reduced-pressure atmosphere, so that the internal pressure of the plurality of voids 250 formed on the surface of each layer of power generation element 100 due to the second compression step can be reduced to be less than 1 atm.

It should be noted that the stacked body used in the second compression step is, for example, the stacked body that has undergone the first compression step. In this way, battery 1000 is formed through the first compression step and the second compression step. It should be noted that the stacked body used in the second compression step may be a stacked body that has not undergone the first compression step. When the stacked body that has not undergone the first compression step is used in the second compression step, the first compression step and the second compression step are performed simultaneously.

As described above, the above various effects of the first compression step and the second compression step make it possible to obtain battery 1000 with low resistance and high capacity. In addition, since a plurality of voids 250 having an internal pressure of less than 1 atm are formed, the reliability of battery 1000 is also improved.

In battery 1000 using an inorganic solid electrolyte, since many grain boundaries are present between hard particles inside, the pressing pressure in the first compression step and the second compression step (that is, the stress during compression) is, for example, 10 MPa or more. Accordingly, the battery characteristics of battery 1000 can be further improved. In addition, when pressing is performed at a high pressure of 10 MPa or more, in the method of pressing in a normal pressure atmosphere, the internal pressure of the voids formed tends to be particularly high because the connection paths connecting the voids to the outside of the body to be compressed is blocked, but pressing under a reduced-pressure atmosphere can lower the internal pressure of the plurality of voids 250.

In addition, when the stacked body that has undergone the first compression step is used in the second compression step, for example, the pressure of pressing in the second compression step is higher than the pressure of pressing in the first compression step. Accordingly, the effect of the second compression step can be further enhanced.

In addition, in the first compression step and the second compression step, the pressure of the reduced-pressure atmosphere may be 0.5 atm or less, or may be 0.1 atm or less. Accordingly, the internal pressure of the plurality of voids 250 formed can be further reduced. In addition, the pressure in the reduced-pressure atmosphere is, for example, greater than 0 atm.

Thus, as pressing in the first compression step and/or the second compression step for forming battery 1000 using the inorganic solid electrolyte progresses, the densities of positive electrode active material layer 120, negative electrode active material layer 110, and solid electrolyte layer 130 are improved.

Next, the method of pressing the body to be compressed in the first compression step and the second compression step will be described. In the first compression step and the second compression step, a reduced-pressure atmosphere is constructed in a space surrounded by a container or the like, and a body to be compressed is pressed in the constructed reduced-pressure atmosphere.

First, Example 1 of the method of pressing the body to be compressed will be described. FIG. 9 is a schematic diagram for explaining Example 1 of a method of pressing the body to be compressed in the first compression step. FIG. 10 is a schematic diagram for explaining Example 1 of the method of pressing the body to be compressed in the second compression step. As shown in FIG. 9 and FIG. 10, a first compression step and a second compression step can be performed using flat press device 800 installed in internal space 905 of vacuum chamber 900 connected to vacuum pump 910. Vacuum chamber 900 is provided with, for example, a door or the like (not shown) for taking in and out the body to be compressed. Specifically, in the first compression step and the second compression step, first, the body to be compressed is placed between the upper and lower pressing plates of flat press device 800. Next, the gas in internal space 905 is exhausted by vacuum pump 910 to bring internal space 905 into a reduced-pressure atmosphere (for example, a vacuum atmosphere). After internal space 905 is brought into a reduced-pressure atmosphere, the body to be compressed is pressed using flat press device 800. The direction of pressure application in pressing by flat press device 800 is the direction of the white arrow shown in FIG. 9 and FIG. 10. Specifically, the direction of pressure application in pressing by flat press device 800 is the direction normal to the main surface of the current collector and each layer of the stacked body, that is, the direction in which the current collector and each layer of the stacked body are stacked side by side. The direction of pressure application in pressing is the same in other pressing methods.

Next, Example 2 of the method of pressing the body to be compressed will be described. FIG. 11 is a schematic diagram for explaining Example 2 of the method of pressing the body to be compressed in the first compression step. FIG. 12 is a schematic diagram for explaining Example 2 of the method of pressing the body to be compressed in the second compression step. As shown in FIG. 11 and FIG. 12, in the first compression step and the second compression step, a body to be compressed is placed in internal space 925 of airtight container 920 connected to vacuum pump 910, and the body to be compressed is pressed by using flat press device 800 from the outside of airtight container 920. Specifically, in the first compression step and the second compression step, first, a body to be compressed is disposed in internal space 925 of airtight container 920. Next, the gas in internal space 925 is exhausted by vacuum pump 910 to make internal space 925 into a reduced-pressure atmosphere. After internal space 925 is brought into a reduced-pressure atmosphere, the body to be compressed is pressed from the outside of airtight container 920 using flat press device 800.

Airtight container 920 includes, for example, deformation portion 921, pressing portion 922, and housing portion 923. Airtight container 920 forms internal space 925 in which portions other than connecting portion 911 with vacuum pump 910 are sealed by deformation portion 921, pressing portion 922, and housing portion 923.

Deformation portion 921 is positioned between pressing portion 922 and housing portion 923. Deformation portion 921 is separable from at least one of pressing portion 922 or housing portion 923. Deformation portion 921 is, for example, in a frame-like shape in a plan view, and is a seal member that seals between pressing portion 922 and housing portion 923. Accordingly, airtight container 920 is maintained in a reduced pressure state. The material of deformation portion 921 is, for example, a material that is softer than the material of each layer of power generation element 100 and is deformed by pressing with flat press device 800. When deformation portion 921 is deformed by pressing with flat press device 800, the pressing pressure from the outside of airtight container 920 is applied to the body to be compressed. Deformation portion 921 comprises an elastic material such as a rubber material that is deformed by pressing with flat press device 800. It should be noted that the material of deformation portion 921 may not have elasticity, and may be a material that undergoes plastic deformation.

Pressing portion 922 is a plate-like member that is the upper lid portion of airtight container 920. A part of pressing portion 922, for example, lower surface 922a of a protruding portion provided in pressing portion 922, is designed to contact the body to be compressed so that the body to be compressed can be pressed. In addition, in pressing portion 922, the protruding portion is provided in the center in a plan view, and the end portion where no protrusion is provided is in contact with deformation portion 921.

Housing portion 923 is a box-shaped member with an open top, and houses a body to be compressed on bottom surface 923a of the box shape of housing portion 923. A part of housing portion 923 is connected to vacuum pump 910 via connecting portion 911 such as a pipe or tube. In addition, the upper end of the side wall portion of housing portion 923 is connected to the end portion of housing portion 923 via deformation portion 921.

A pressing force is applied to pressing portion 922 from the upper pressing plate of flat press device 800, and a pressing force is applied to housing portion 923 from the lower pressing plate of flat press device 800. For example, a pressing force by flat press device 800 is directly applied to pressing portion 922 and housing portion 923. The body to be compressed is disposed, for example, so as to be sandwiched between box-shaped bottom surface 923a of housing portion 923 and lower surface 922a of the protruding portion of pressing portion 922. Each of pressing portion 922 and housing portion 923 comprises a rigid material harder than the material of each layer of power generation element 100. Accordingly, when pressing is performed by flat press device 800, the body to be compressed can be stably pressed while maintaining the container shape of airtight container 920 as a whole and the reduced pressure state of internal space 925. It should be noted that the same material as that of deformation portion 921 may be used for pressing portion 922 and housing portion 923.

With such a configuration, pressing of the body to be compressed is performed by deformation portion 921 being deformed so as to contract in the pressing direction by the pressing of flat press device 800, and transmitting the force of flat press device 800 to the body to be compressed through pressing portion 922 and housing portion 923. In addition, since deformation portion 921 returns to its original shape, for example, by being released from the pressing of flat press device 800, airtight container 920 can be used again by replacing the body to be compressed.

By pressing from the outside of airtight container 920 in this way, the equipment for building a reduced-pressure atmosphere can be downsized.

Next, Example 3 of the method of pressing the body to be compressed will be described. FIG. 13 is a schematic diagram for explaining Example 3 of the method of pressing the body to be compressed in the first compression step. FIG. 14 is a schematic diagram for explaining Example 3 of the method of pressing the body to be compressed in the second compression step. As shown in FIG. 13 and FIG. 14, the first compression step and the second compression step can be performed using roll press device 850 installed in internal space 905 of vacuum chamber 900 connected to vacuum pump 910, and unwinding roll 860 and winding roll 870 which are disposed to sandwich roll press device 850. Roll press device 850, unwinding roll 860, and winding roll 870 are all installed in internal space 905 of vacuum chamber 900.

As shown in FIG. 13, in the first compression step, each layer of power generation element 100 is continuously pressed by roll press device 850 while conveying body to be compressed 400 from unwinding roll 860 to winding roll 870 along conveying roller 880. Body to be compressed 400 has, for example, the same stacking configuration as the stacked body described as the stacked body used in the first compression step mentioned above.

In addition, as shown in FIG. 14, in the second compression step, while conveying bodies to be compressed 410 and 420 from two unwinding rolls 860 along conveying roller 880, positive electrode active material layer 120 and negative electrode active material layer 110 are compression-bonded by roll press device 850 so as to face each other with solid electrolyte layer 130 interposed therebetween. Until the start of compression bonding, bodies 410 and 420 to be compressed are conveyed using winding roll 870, and battery assembly 500 after the start of compression bonding can be conveyed and collected by a conveying and cutting device (not shown). Body to be compressed 410 and body to be compressed 420 have, for example, the same stacking configuration as the stacked body described as the stacked body used in the second compression step mentioned above.

Next, Example 4 of the method of pressing the body to be compressed will be described. FIG. 15 is a schematic diagram for explaining Example 4 of the method of pressing the body to be compressed in the first compression step. FIG. 16 is a schematic diagram for explaining Example 4 of the method of pressing the body to be compressed in the second compression step. As shown in FIG. 15 and FIG. 16, the first compression step and the second compression step can be performed using roll press device 850 installed in internal space 935 of vacuum chamber 930 connected to vacuum pump 910, and unwinding roll 860 and winding roll 870 which are disposed to sandwich roll press device 850. In addition, vacuum chamber 930 is provided with seal rollers 890 for maintaining the airtightness of vacuum chamber 930 at locations where body to be compressed 400 or bodies to be compressed 410 and 420 enter and exit. Accordingly, equipment for building a reduced-pressure atmosphere can be downsized. The conveying and pressing of body to be compressed 400 or bodies to be compressed 410 and 420 in Example 4 are the same as in Example 3.

It should be noted that the method of performing the first compression step and the second compression step in a reduced-pressure atmosphere is not limited to these examples. For example, in the first compression step and the second compression step, pressing may be performed while heating in order to efficiently proceed with densification and compression bonding. In addition, in the first compression step and the second compression step, before internal space 905, internal space 925, or internal space 935 is made into a reduced-pressure atmosphere, internal space 905, internal space 925, or internal space 935 may be replaced with an inert gas such as argon or nitrogen.

In addition, though single-cell battery 1000 having one power generation element 100 was described in the above description, the configuration and manufacturing method of battery 1000 according to the present embodiment are also effective for the stacked battery having a configuration of a plurality of power generating elements 100 stacked in a series or parallel structure via a current collector.

### [Embodiment 2]

Next, Embodiment 2 will be described. Embodiment 2 describes a battery system using the battery according to Embodiment 1. Battery 1000 according to Embodiment 1 mentioned above includes a plurality of voids 250 with a negative pressure inside power generation element 100, so that it has excellent environmental resistance, and provides various advantages in actual operation.

FIG. 17 is a schematic diagram showing a schematic configuration of battery system 3000 according to Embodiment 2. As shown in FIG. 17, battery system 3000 includes battery 2000 and container 600.

Battery 2000 is, for example, a stacked battery that includes a plurality of batteries 1000 according to Embodiment 1 and has a stacked structure in which the plurality of batteries 1000 are stacked. It should be noted that in FIG. 17, the illustration of the structure in which batteries 1000 are stacked is omitted, and battery 2000 is shown as one rectangle. Since battery 2000 is a stacked battery, high voltage or high capacity can be achieved. Battery 2000 is disposed in internal space 605 of container 600. The battery included in battery system 3000 may be battery 1000, which is a single cell battery.

Container 600 is a closed container for housing battery 2000. Container 600 includes internal space 605 that serves as a reduced-pressure environment. A reduced-pressure environment is an environment in which the pressure of the environment in which battery 2000 is placed is 1 atm or less. That is, the pressure in internal space 605 is less than 1 atm. For container 600, for example, internal space 605 may be a reduced-pressure environment by housing battery 2000 in container 600 under a reduced-pressure environment, and internal space 605 may serve as a reduced-pressure environment by means of a vacuum pump (not shown) or a ventilation door, vent, or the like (not shown) that connects to the outside of container 600 in a reduced-pressure environment. Container 600 is, for example, a battery case for protecting power generation element 100 and the like, but it is not limited to a battery-dedicated container such as a battery case, and may be an airplane, a spacecraft, a vacuum chamber, or the like. Container 600 may be flown by, for example, a flight device (not shown).

In addition, FIG. 18 is a schematic diagram showing a schematic configuration of another battery system 3100 according to the second embodiment. As shown in FIG. 18, battery system 3100 includes battery 2000 and container 610.

Container 610 includes internal space 615 that serves as a reduced-pressure environment. In addition, container 610 is provided with holes 612 that connects internal space 615 and the outside of container 610. Container 610 is, for example, disposed in or moved into a reduced-pressure environment so that inner space 615 serves as a reduced-pressure environment due to holes 612. Container 610 is, for example, a battery case for protecting power generation element 100 and the like, which is installed in a moving object moving in a high-altitude environment or outer space, such as an airplane or spacecraft. Container 610 is not limited to a battery-dedicated container such as a battery case, but may be a housing in equipment used in a high-altitude environment or outer space, or a device housing installed in an airplane or spacecraft.

In this way, in battery system 3000 and battery system 3100, for example, battery 2000 is disposed in a reduced-pressure environment, and battery 2000 is charged or discharged.

In the present embodiment, the pressure in the reduced-pressure environment may be 0.95 atm or less, or may be 0.8 atm or less. In addition, the pressure in the reduced-pressure environment is, for example, greater than 0 atm. For example, under high-altitude flight conditions, the outside of container 610 is generally in a reduced-pressure environment, and battery system 3100 may be placed in an environment of, for example, 0.95 atm or less, or even 0.8 atm or less. Even in such a reduced-pressure environment, battery 2000 includes a plurality of voids 250 with a negative pressure, so that damage to power generation element 100 starting from the plurality of voids 250 can be suppressed.

In addition, the internal pressure of the plurality of voids 250 in battery 2000 is, for example, lower than or equal to the pressure in the reduced-pressure environment. Accordingly, damage to power generation element 100 starting from the plurality of voids 250 can be suppressed, and the plurality of voids 250 can exert a force that attracts the layers of power generation element 100 inward.

Thus, since the battery system according to the present embodiment includes battery 1000 according to Embodiment 1, high reliability of the battery can be ensured even in a battery system in which the battery is placed in a reduced-pressure environment.

### [Other Embodiments]

Although the battery and battery system according to the present disclosure have been described above based on the embodiments, the present disclosure is not limited to these embodiments. Forms obtained by applying various modifications to the embodiment conceived by a person skilled in the art or other forms realized by combining part of the components in the embodiments without departing from the spirit of the present disclosure are also included in the present disclosure.

For example, in the above embodiments, the plurality of voids 250 are present inside each of negative electrode active material layer 110, positive electrode active material layer 120, and solid electrolyte layer 130, but the present invention is not limited thereto. The plurality of voids 250 are only needed to be present inside at least one of negative electrode active material layer 110, positive electrode active material layer 120, or solid electrolyte layer 130.

In addition, for example, in the above embodiments, negative electrode active material layer 110, positive electrode active material layer 120, and solid electrolyte layer 130 each contain an inorganic solid electrolyte, but the present invention is not limited thereto. Each of negative electrode active material layer 110, positive electrode active material layer 120, and solid electrolyte layer 130 may contain a solid electrolyte other than the inorganic solid electrolyte in addition to the inorganic solid electrolyte or instead of the inorganic solid electrolyte.

In addition, the above embodiments can be modified, replaced, added, omitted, etc. in various ways within the scope of claims or equivalents thereof.

### [Industrial Applicability]

A battery or the like according to the present disclosure can be used as a battery or the like for electronic equipment, electric appliances, electric vehicles, and the like.

### [Reference Signs List]

100 Power generation element
110 Negative electrode active material layer
120 Positive electrode active material layer
130 Solid electrolyte layer
210 Negative electrode current collector
220 Positive electrode current collector
250 Void
310, 320, 330, 340, 350 Stacked body
400, 410, 420 Object to be compressed
600, 610 Container
605, 615, 905, 925, 935 Internal space
612 Hole
800 Flat press device
850 Roll press device
860 Unwinding roll
870 Winding roll
880 Conveyor roller
890 Seal roller
900, 930 Vacuum chamber
910 Vacuum pump
911 Connecting portion
920 Airtight container
921 Deformation portion
922 Pressing portion
922a Lower surface
923 Housing portion
923a Bottom surface
1000, 2000 Battery
3000, 3100 Battery system

## Claims

1. A battery comprising:
a power generation element including:
a positive electrode layer containing a positive electrode active material and a first inorganic solid electrolyte;
a negative electrode layer containing a negative electrode active material and a second inorganic solid electrolyte; and
a solid electrolyte layer positioned between the positive electrode layer and the negative electrode layer and containing a third inorganic solid electrolyte,
wherein a plurality of voids are present inside the power generation element, and
an internal pressure of the plurality of voids is lower than 1 atm.

2. The battery according to claim 1,
wherein the plurality of voids are positioned along a grain boundary of at least one of the first inorganic solid electrolyte, the second inorganic solid electrolyte, or the third inorganic solid electrolyte.

3. The battery according to claim 1 or 2,
wherein at least one of the plurality of voids is present inside at least one of the positive electrode layer or the negative electrode layer.

4. The battery according to any one of claims 1 to 3,
wherein at least one of the plurality of voids is positioned on a surface of at least one of the positive electrode layer, the negative electrode layer, or the solid electrolyte layer.

5. The battery according to any one of claims 1 to 4,
wherein the internal pressure of the plurality of voids is lower than or equal to 0.1 atm.

6. The battery according to any one of claims 1 to 5,
wherein an average of respective maximum widths of the plurality of voids is less than or equal to 10 µm.

7. The battery according to any one of claims 1 to 6,
wherein a density of at least one of the positive electrode layer, the negative electrode layer, or the solid electrolyte layer is greater than or equal to 90% of a material theoretical density.

8. A battery system comprising:
a container including an internal space that serves as a reduced-pressure environment; and
the battery according to any one of claims 1 to 7, which is disposed in the internal space.

9. The battery system according to claim 8,
wherein a pressure of the reduced-pressure environment is lower than or equal to 0.95 atm.

10. The battery system according to claim 8 or 9,
wherein the internal pressure of the plurality of voids is lower than or equal to the pressure of the reduced-pressure environment.

11. A method for manufacturing a battery including:
a positive electrode layer containing a positive electrode active material and a first inorganic solid electrolyte;
a negative electrode layer containing a negative electrode active material and a second inorganic solid electrolyte; and
a solid electrolyte layer positioned between the positive electrode layer and the negative electrode layer and containing a third inorganic solid electrolyte, the method comprising:
pressing a body to be compressed including at least one of the positive electrode layer, the negative electrode layer, or the solid electrolyte layer in a reduced-pressure atmosphere.

12. A method for manufacturing a battery including a positive electrode layer, a negative electrode layer, and a solid electrolyte layer positioned between the positive electrode layer and the negative electrode layer, the method comprising:
pressing a body to be compressed in a reduced-pressure atmosphere, the body to be compressed being formed by stacking the positive electrode layer and the negative electrode layer to face each other with the solid electrolyte layer interposed therebetween.

13. The method for manufacturing the battery according to claim 11 or 12,
wherein a pressure of the reduced-pressure atmosphere is lower than or equal to 0.1 atm.

14. The method for manufacturing the battery according to any one of claims 11 to 13,
wherein a pressure of the pressing is higher than or equal to 10 MPa.

15. The method for manufacturing the battery according to any one of claims 11 to 14,
wherein in the pressing, the body to be compressed is disposed in an airtight container, the reduced-pressure atmosphere is created in the airtight container, and then the body to be compressed is pressed from outside the airtight container,
the airtight container includes a deformation portion that is deformed by the pressing, and
a pressure of the pressing from the outside of the airtight container is applied to the body to be compressed by deforming the deformation portion by the pressing.
